# EUROPEAN PATENT SPECIFICATION

(11) **EP 0 854 121 B1**
(45) Date of publication and mention of the grant of the patent: **29.09.2004**
(21) Application number: 98400055.4
(22) Date of filing: 14.01.1998
(51) Int. Cl.: C03C 25/10

(54) **Apparatus for curing a fiber having at least two fiber coating curing stages separated by a cooling stage**
Vorrichtung zur Aushärtung von Fasern mit wenigstens zwei Aushärtungsstufens die getrennt sind durch einem Abkühlvorgang
Appareil pour le durcissement d'un fibre ayant au moins deux étapes de durcissement séparés d'une étape de refroidissement

(30) Priority: 15.01.1997 US 784014
(43) Date of publication of application: 22.07.1998
(73) Proprietor: ALCATEL, 75008 Paris (FR)
(72) Inventor: Overton, Robert J., North Carolina 28645 (US)
(74) Representative: Lamoureux, Bernard

(56) References cited:
- EP-A- 0 261 856
- DE-A- 4 226 344
- DE-U- 8 811 384
- GB-A- 2 287 244
- DATABASE WPI Section Ch, Week 9338 Derwent Publications Ltd., London, GB; Class A89, AN 93-299461 XP002063223 & JP 05 213 636 A (FUJIKURA LTD) , 24 August 1993
- DATABASE WPI Section Ch, Week 9239 Derwent Publications Ltd., London, GB; Class A32, AN 92-319971 XP002063224 & JP 04 224 144 A (SUMITOMO ELECTRIC CO) , 13 August 1992

## Description

### BACKGROUND OF THE INVENTION

### Field of the Invention

The present invention relates to an apparatus for producing fiber; and, more particularly, relates to an apparatus for producing fiber which includes drawing, cooling, coating and curing optical fiber.

### Brief Description of the Prior Art

In the prior art, there are many different ways to produce fiber, and many different ways to draw, cool, coat and cure optical fiber. For example, U.S. Patent No. 5,092,264, issued to the instant inventor, describes a device to filter out an infrared component of radiation emitted on the fiber by Ultraviolet (UV) curing lamps for the purpose of reducing the heat put into a fiber coating. The device consists of a double-walled, quartz center tube placed within the UV curing lamps through which the fiber passes as it is irradiated. The annulus of the tube is filled with water to absorb the infrared component, thus potentially speeding up the cure process by keeping the coatings cooler than otherwise would be the case.

In addition, both Fusion Systems, Inc., and Iwasaki Electric Co. offer "cold" reflectors or mirrors for UV irradiators. The reflectors reduce the infrared component of the radiation which is directed at the fiber coatings during curing. This is accomplished by the mirrors being coated with a deposited layer which reflects the desired UV component but not the infrared.

It has been found during the production of optical fiber that the UV curable coating applied to the optical fiber will not completely cure when the coating is above certain temperatures. Therefore, no matter how many UV lamp cure stages are used to cure the optical fiber coatings, the optical fiber coating will not be completely cured when it is at a high temperature. It has also been found that the properties of the coating improve when cured at lower temperatures. It is hard to control the coating temperature because the UV lamps which are used to cure an optical fiber coating increase the temperature of the coating through the absorption of high-intensity UV and infrared (FR) radiation. Additionally, the coating cure process is an exothermic reaction (generating heat).

The prior art device allows the coating to become very hot, both from the excess UV energy absorbed by the materials and from the exothermic nature of the acrylate crosslinking cure reaction itself. Because of this, there has been little significant benefit realized from these methods in industrial applications.

An article entitled "The Effects of Cure Temperature on the Thermomechanical Properties of UV Curable Coatings", by B. Overton et al., describes how the development of desired coating cure levels is retarded by high temperature. The prior art does not describe a cooling medium between UV cure stages to provide a

### SUMMARY OF THE INVENTION

The present invention provides an apparatus for curing a coated fiber, comprising at least two fiber coating curing stages and a cooling stage comprising an active cooling tube.

The at least two fiber coating curing stages respond to the coated fiber, for providing a partially cured coated fiber, and further respond to a cooled partially cured coated fiber, for further providing a cured coated fiber.

The cooling stage responds to the partially cured coated fiber, for providing the cooled partially cured coated fiber.

In operation, the UV cure lamps can be configured to allow an initial cure level to be attained, reaching the gel point of the coating, then actively removing the heat of the reaction and the heat absorbed from the first UV lamp. This is followed by additional UV exposure to complete the cure of the coatings. The advantage is that this allows complete cure of the coatings even at very high draw speeds. An efficient fiber cooling tube is necessary to optimize the effect.

The cooling stage removes heat from an optical fiber between UV cure stages so that upon curing in subsequent UV cure stages, the optical fiber coating fully cures. The operation of the apparatus includes the steps of : applying the coating to the optical fiber, passing the coated optical fiber through a first UV cure stage which mostly cures the coating, passing a partially cured coated optical fiber through a cooling tube which reduces the temperature of the optical fiber and coating, and then passing the optical fiber through a subsequent UV cure stage.

The present invention does not seek to prevent the coatings from heating up during the cure process on fiber optic draw towers. Rather, the apparatus of the present invention seeks to irradiate the coating material on the fiber, thus initiating the cure reaction, then actively remove the heat generated during the majority of the cure process, and irradiate the material again to complete the reaction at a fastest possible rate.

The present invention provides a number of advantages. First, some of the UV cure stages may be eliminated. This adds a cost benefit of not requiring the use of additional UV cure stages and the associated equipment costs. Also, the maintenance cost associated with replacing the various component parts of the UV cure lamps are saved. An additional advantage of the invention is that the draw speed may be increased.

Another advantage of the present invention is that the cure of the coated fiber can be accomplished to the full extent and with fewer UV lamps than otherwise necessary in the known prior art approaches.

### BRIEF DESCRIPTION OF THE DRAWINGS

The invention, both as to its organization and manner of operation, may be further understood by reference to a drawing (not drawn to scale) which includes Figures 1-3 taken in connection with the following description.
Figure 1 is an illustration of an embodiment of an UV lamp configuration which is the subject matter of the present invention.
Figure 2 is an illustration of a cooling stage for the embodiment shown in Figure 1.
Figure 3 is an illustration of another embodiment of an UV lamp configuration which is the subject matter of the present invention.

### DESCRIPTION OF THE BEST MODE OF THE INVENTION

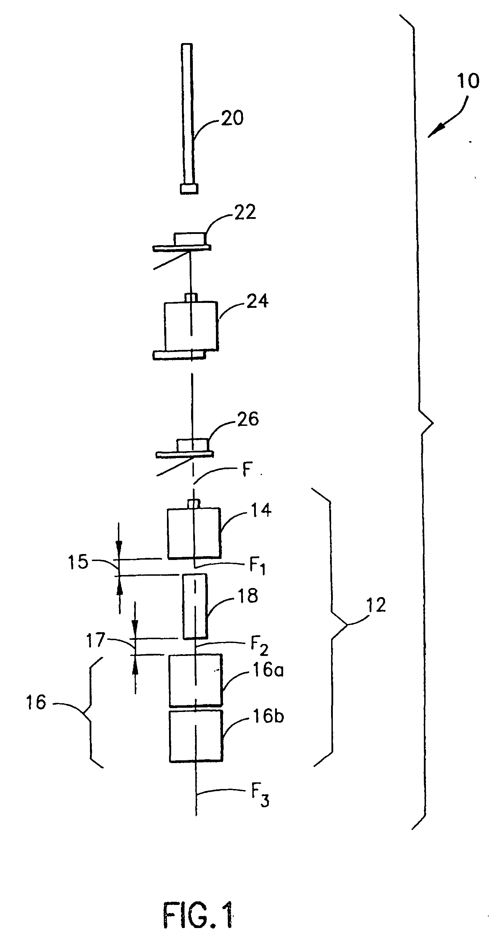

Figure 1 shows an apparatus for producing fiber generally indicated as 10. In its broadest sense, the invention consists of an apparatus that provides an improved UV curing stage generally indicated as 12 for curing a coated fiber F, comprising at least two fiber coating curing stages 14, 16 and a cooling stage 18 comprising an active cooling tube.

As shown, the at least two fiber coating curing stages 14, 16 respond to the coated fiber F, for providing a partially cured coated fiber generally indicated as F₁, and further respond to a cooled partially cured coated fiber generally indicated as F₂, for further providing a cured coated fiber generally indicated as F₃.

The cooling stage 18 responds to the partially cured coated fiber F₁, for providing the cooled partially cured coated fiber F₂.

The fiber coating curing stage 14 has one or more UV cure lamps. The fiber coating curing stage 16 has one or more UV cure lamps indicated as 16(a), 16(b). Each of the at least two fiber coating curing stages 14, 16 is separated from the cooling stage 18 by at least a 25 mm (one inch) space generally indicated as 15, 17. The at least 25 mm (one inch) spaces 15, 17 are entirely open to ambient atmosphere for open air cooling. At the 25 mm (one inch) space 15 the temperature is in a range of 100-110 degrees Celsius, and at the 25 mm (one inch) space 17 the temperature is less than 60 degrees Celsius. Embodiments are also envisioned wherein each of the secondary UV cure lamps 16(a), 16(b) are separated from one another by at least a 25 mm (one inch) space.

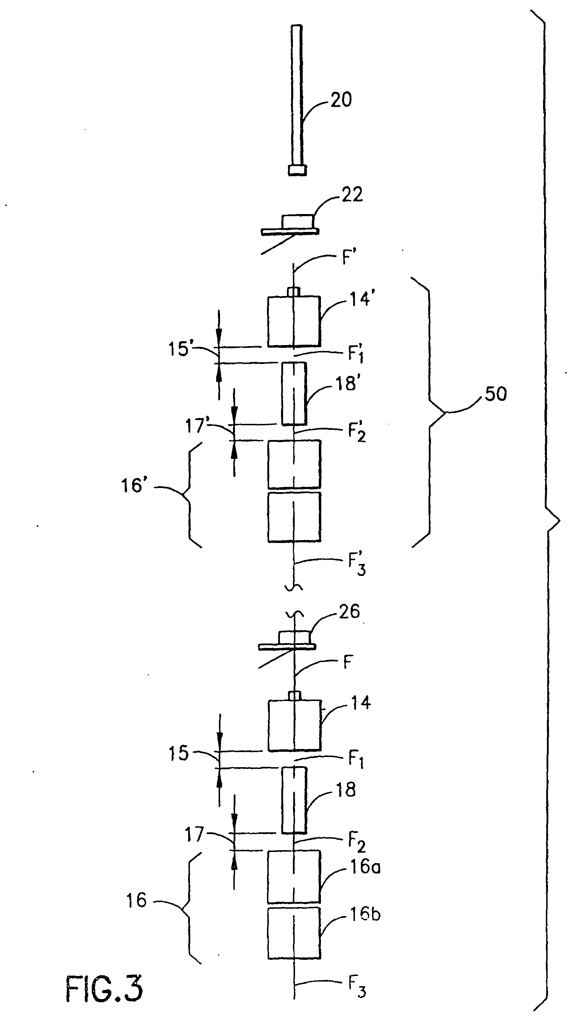

In Figure 1, the fiber producing apparatus 10 also includes a cooling tube 20, a primary coater 22, a primary UV curing stage having a primary UV cure lamp 24 and a secondary coater 26, which are all known in the art. As shown, the improved UV curing stage 12 is positioned after the secondary coater 26, which provides the coated fiber F. However, the scope of the invention is not intended to be limited to only such an embodiment, because Figure 3 shows another embodiment in which the improved UV curing stage 12 is also positioned between the primary coater 22 and the secondary coater 26, as discussed below.

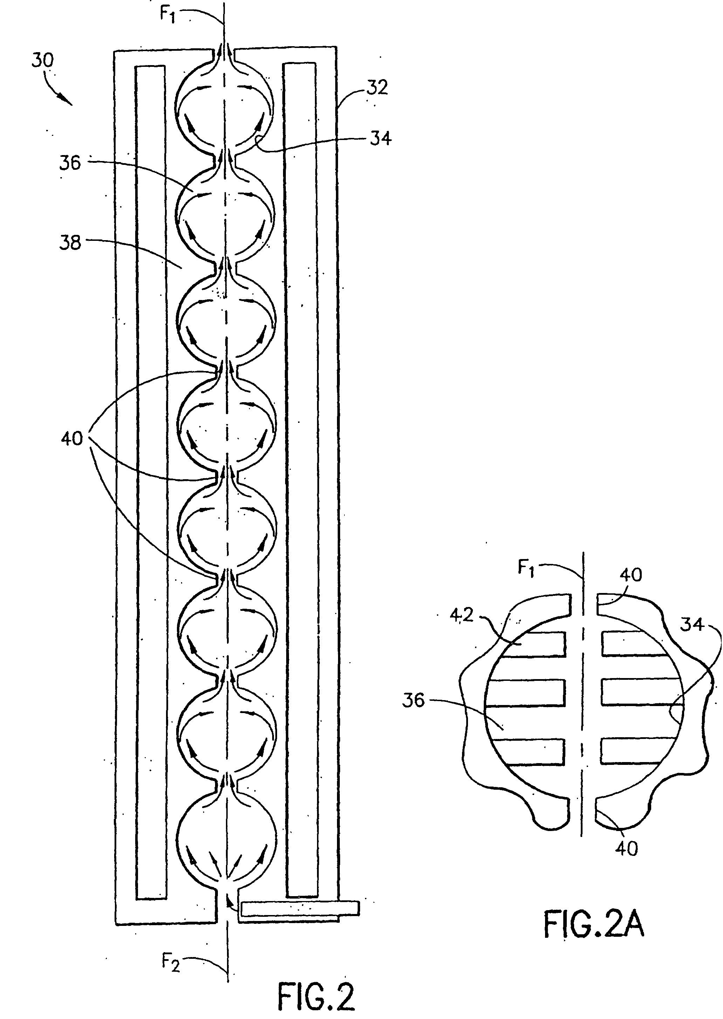

Figure 2 shows the active cooling tube 18 in Figure 1 generally indicated as 30. The active cooling tube 30 is a hollow tube 32 having tube walls 34 through which a cooling gas flows, as generally indicated by the arrows shown in Figure 2. The cooling gas acts as a heat transfer medium from the partially cured coated fiber F₁ to the tube walls 34 of the hollow tube 32. The cooling gas is helium, although the scope of the invention is not intended to be strictly limited to only this particular gas. As shown, the active cooling tube 30 consists of a series of cylindrical hollows generally indicated as 36 in a body of heat conducting metal generally indicated as 38 connected by narrow apertures generally indicated as 40. The series of cylindrical hollows 36 and narrow apertures 40 forms a path taken by the partially cured coated fiber F₁. As shown in Figure 2a, the series of cylindrical hollows 36 have fingers 42 machined in such a way as to increase the surface area of the heat conducting metal 38 for absorbing the heat removed from the partially cured coated fiber F₁ by the cooling gas. The series of cylindrical hollows 36 and narrow apertures 40 through which the cooling gas flows provides turbulence to the flow of the cooling gas, thereby increasing the efficiency of heat transfer between the partially cured coated fiber F₁ and the tube walls 34 of the hollow tube 30.

Figure 3 shows another embodiment of the improved UV curing stage having an improved UV primary curing stage generally indicated as 50. In Figures 1 and 3, elements that are similar in both figures are numbered with similar reference numerals. The improved UV primary curing stage 50 has at least two fiber coating curing stages 14', 16' and a cooling stage 18'. One of the at least two fiber coating curing stages responds to a primary coated fiber from the primary coater 22, for providing a partially cured primary coated fiber. The cooling stage responds to the partially cured primary coated fiber F₁', for providing a cooled partially cured primary coated fiber. The other of the at least two fiber coating curing stages responds to the cooled partially cured primary coated fiber, for providing a cured primary coated fiber to the secondary coater 26.

The interposition of the active cooling device 18 in Figures 1-3 increases the speed and efficiency of the curing reaction. The active cooling tube 18 is designed so as to increase the turbulence of the flow of the cooling gas for increased efficiency of heat transfer from the fiber or the coating.

It will thus be seen that the objects set forth above, and those made apparent from the preceding description, are efficiently attained and, since certain changes may be made in the above construction without departing from the scope of the invention, it is intended that all matter contained in the above description or shown in the accompanying drawings shall be interpreted as illustrative and not in a limiting sense.

It is also to be understood that the following claims are intended to cover all of the generic and specific features of the invention herein described and all statements of the scope of the invention which, as a matter of language, might be said to fall therebetween.

## Claims

1. An apparatus (10) for curing a coated fiber (F, F'), comprising :
at least two fiber coating curing stages (12, 14, 14', 16, 16', 16(a), 16(b)), responsive to the coated fiber (F, F'), for providing a partially cured coated fiber (F₁, F₁'), and further responsive to a cooled partially cured coated fiber (F₂, F₂'), for further providing a cured coated fiber (F₃, F₃'), and
a cooling stage (18, 18'), responsive to the partially cured coated fiber (F₁, F₁'), for providing the cooled partially cured coated fiber (F₂, F₂'),
wherein the cooling stage (18, 18') comprises an active cooling tube (30).

2. An apparatus according to claim 1, wherein the active cooling tube (30) is a hollow tube (32) having tube walls (34) through which a cooling gas flows.

3. An apparatus (10) according to claim 2, wherein the cooling gas acts as a heat transfer medium from the partially cured coated fiber (F₁, F₁') to tube walls (34) of the hollow tube (32).

4. An apparatus (10) according to claim 3, wherein the cooling gas is helium.

5. An apparatus (10) according to claim 1, wherein the active cooling tube (30) consists of a series of cylindrical hollows (36) in a body of heat conducting metal (38) connected by narrow apertures (40).

6. An apparatus (10) according to claim 5, wherein the series of cylindrical hollows (36) and the narrow apertures (40) forms a path taken by the partially cured coated fiber (F₁, F₁').

7. An apparatus (10) according to claim 6, wherein the series of cylindrical hollows (36) have fingers (42) machined in such a way as to increase the surface area of the metal for absorbing the heat removed from the partially cured coated fiber (F₁, F₁') by the cooling gas.

8. An apparatus (10) according to claim 6, wherein the series of cylindrical hollows (36) and the narrow apertures (40) through which the cooling gas flows provides turbulence to the flow of the cooling gas, thereby increasing the efficiency of heat transfer between the partially cured coated fiber (F₁, F₁') and the tube walls (34) of the hollow tube (32).

## Patentansprüche

1. Ein Gerät (10) zur Aushärtung einer ummantelten Faser (F, F'), bestehend aus:
mindestens zwei Aushärtungsphasen zur Faserummantelung (12, 14, 14', 16, 16', 16(a), 16(b)), die auf die ummantelte Faser (F, F') ansprechen, zur Herstellung einer teilweise ausgehärteten, ummantelten Faser (F₁, F₁'), und die zudem auf eine gekühlte, teilweise ausgehärtete, ummantelte Faser (F₂, F₂') ansprechen, zur Herstellung einer ausgehärteten, ummantelten Faser (F₃, F₃'), und
einer Kühlphase (18, 18'), die auf die teilweise ausgehärtete, ummantelte Faser (F₁, F₁') anspricht, zur Herstellung der gekühlten, teilweise ausgehärteten, ummantelten Faser (F₂, F₂'),
wobei die Kühlphase (18, 18') ein aktives Kühlrohr (30) beinhaltet.

2. Ein Gerät gemäß Anspruch 1, wobei es sich bei dem aktiven Kühlrohr (30) um ein hohles Rohr (32) mit Rohrwänden (34) handelt, durch die ein Kühlgas fließt.

3. Ein Gerät (10) gemäß Anspruch 2, wobei das Kühlgas als Mittel zur Wärmeübertragung von der teilweise ausgehärteten, ummantelten Faser (F₁, F₁') auf die Rohrwände (34) des hohlen Rohrs (32) fungiert.

4. Ein Gerät (10) gemäß Anspruch 3, wobei es sich bei dem Kühlgas um Helium handelt.

5. Ein Gerät (10) gemäß Anspruch 1, wobei das aktive Kühlrohr (30) aus einer Reihe zylinderförmiger Hohlräume (36) in einem Körper aus wärmeleitendem Metall (38) besteht, die durch schmale Schlitze (40) miteinander verbunden sind.

6. Ein Gerät (10) gemäß Anspruch 5, wobei die Reihe zylinderförmiger Hohlräume (36) und die schmalen Schlitze (40) eine Bahn bilden, in der die teilweise ausgehärtete, ummantelte Faser(F₁, F₁') verläuft.

7. Ein Gerät (10) gemäß Anspruch 6, wobei die Reihe zylinderförmiger Hohlräume (36) mit Fingern (42) versehen ist, die so ausgeführt sind, dass sie die Oberfläche des Metalls vergrößern, um die Hitze aufzunehmen, die der teilweise ausgehärteten, ummantelten Faser (F₁, F₁') durch das Kühlgas entzogen wird.

8. Ein Gerät (10) gemäß Anspruch 6, wobei die Reihe zylinderförmiger Hohlräume (36) und die schmalen Schlitze (40), durch die das Kühlgas verläuft, eine Verwirbelung des Kühlgas-Flusses gewährleisten, wodurch die Effizienz der Wärmeübertragung zwischen der teilweise ausgehärteten, ummantelten Faser (F₁, F₁') und den Rohrwänden (34) des hohlen Rohrs (32) gesteigert wird.

## Revendications

1. Installation (10) pour la réticulation d'une fibre revêtue (F, F'), comprenant :
au moins deux étages de réticulation de la fibres revêtue (12, 14, 14', 16, 16', 16(a), 16(b)), s'appliquant à la fibre revêtue (F, F'), pour conduire à la fibre revêtue partiellement réticulée (F₁, F₁'), et ensuite s'appliquant à la fibre revêtue partiellement réticulée refroidie (F₂, F₂'), pour conduire ensuite à la fibre revêtue réticulée (F₃, F₃'), and
un étage de refroidissement (18, 18'), s'appliquant à la fibre revêtue partiellement réticulée (F₁, F₁'), pour conduire à la une fibre revêtue partiellement réticulée (F₂, F₂'),
dans laquelle l'étage de refroidissement (18, 18') comprend un tube de refroidissement actif (30).

2. Installation selon la revendication 1, dans laquelle le tube de refroidissement actif (30) est un tube creux (32) ayant des parois de tube (34) au travers desquelles circule un gaz refroidissant.

3. Installation (10) selon la revendication 2, dans laquelle le gaz refroidissant se comporte comme un milieu de transfert de chaleur à partir de la fibre revêtue partiellement réticulée (F₁, F₁') vers les parois de tube (34) du tube creux (32).

4. Installation (10) selon la revendcation 3, dans laquelle le gaz refroidissant est l'hélium.

5. Installation (10) selon la revendication 1, dans laquelle le tube de refroidissement actif (30) consiste en une série de trous cylindriques (36) dans un corps en métal conducteur de chaleur (38) reliés par des orifices étroits (40).

6. Installation (10) selon la revendication 5, dans laquelle la série de trous cylindriques (36) et les orifices étroits (40) forment un chemin emprunté par la fibre revêtue partiellement réticulée (F₁, F₁').

7. Installation (10) selon la revendication 6, dans laquelle la série de trous cylindriques (36) a des doigts (42) usinés de manière à augmenter la surface du métal pour l'absorption de la chaleur extraite de la fibre revêtue partiellement réticulée (F₁, F₁') par le gaz refroidissant.

8. Installation (10) selon la revendication 6, dans laquelle la série de trous cylindriques (36) et les orifices étroits (40) au travers desquels circule le gaz refroidissant provoque des turbulences dans le flux de gaz refroidissant, de ce fait augmente l'efficacité du transfert de chaleur entre la fibre revêtue partiellement réticulée (F₁, F₁') et les parois de tube (34) du tube creux (32).
